(19) Europäisches Patentamt
European Patent Office
Office européen des brevets

(11) EP 3 988 597 A1

(12) EUROPEAN PATENT APPLICATION

(43) Date of publication:
**27.04.2022 Bulletin 2022/17**

(21) Application number: **20203841.0**

(22) Date of filing: **26.10.2020**

(51) International Patent Classification (IPC):
***C08G 18/10*** *(2006.01)* ***C08G 18/28*** *(2006.01)*
***C08G 18/38*** *(2006.01)* ***C08G 18/72*** *(2006.01)*
***C08G 18/79*** *(2006.01)* ***C09J 175/08*** *(2006.01)*

(52) Cooperative Patent Classification (CPC):
(C-Sets available)
**C08G 18/3821; C08G 18/10; C08G 18/283; C08G 18/722; C08G 18/792; C08G 18/798; C09J 175/08** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventors:
- **YANG, Ling**
  **Shanghai, Pudong 201209 (CN)**
- **ZHENG, Junchao**
  **Shanghai, Pudong 200126 (CN)**
- **LIU, Hao**
  **Shanghai, 200123 (CN)**
- **MA, Yaguang**
  **Shanghai, Pudonng New District 201209 (CN)**
- **SHEN, Jianping**
  **Shanghai, Putuo District 200333 (CN)**
- **LI, Jinqi**
  **Shanghai, Pudong New District 201210 (CN)**

(74) Representative: **Levpat**
**c/o Covestro AG**
**Gebäude 4825**
**51365 Leverkusen (DE)**

# (54) TWO-COMPONENT COATING COMPOSITION

(57) The present invention relates to a two-component coating composition, to a method for applying the composition and to the use of the composition, and to a product obtained by coating with the coating composition. The two-component coating composition contains an A-component containing a polyaspartic ester and a B-component containing a polyether-modified polyisocyanate, and the composition has a molar ratio of isocyanate groups to amino groups of 0.8:1-4:1. The two-component coating composition provided by the invention has the advantages of a long working time, quick drying, a high hardness and a high bubble-free film thickness.

EP 3 988 597 A1

(52) Cooperative Patent Classification (CPC): (Cont.)

C-Sets
**C08G 18/10**

## Description

### Technical Field

The present invention relates to a two-component coating composition, to a method for applying the coating composition and to the use of the composition, and to a product obtained by coating with the coating composition.

### Background technology

Two-component coatings containing aspartic esters are widely used and particularly widely used as floor finish paint, because the two-component coatings have the advantages of weather resistance, wear resistance, humidity and heat resistance and salt spray resistance, and can meet the requirements for high solid contents, low viscosity and environmental protection.

EP0573860B discloses a two-component coating, containing a polyisocyanate, an isocyanate-reactive component and a catalyst, wherein the equivalent ratio of isocyanate groups to isocyanate-reactive groups is 0.8:1-20:1.

US2004067315A discloses a two-component coating, containing a prepolymer of isocyanate groups and an isocyanate-reactive component.

CN103834282A discloses a weather-resistant anticorrosive polyurea coating, which consists of a component-A and a component-B, wherein the component-A consists of an aliphatic polyisocyanurate and dimethylbenzene, the component-B consists of a modified dimeric aspartic ester polyurea resin, a dispersing agent, a leveling agent, a defoaming agent, an anti-settling agent, organobentonite, a pigment, a filler, a flatting agent, dimethylbenzene and propylene glycol monomethyl ether acetate, and the weight ratio of the component-A to the component-B is 1: 4.

The above recited two-component coatings have a short working time, can be only applied with a special spraying equipment, which increases the cost and difficulty of application.

The current methods for prolonging the working time mainly comprise: 1) A large amount of active diluent or solvent is added into a coating formula to reduce the viscosity-increasing speed of the coating so as to ensure a sufficient working time, but many active diluents (such as vinylene carbonate) have certain toxicity, and the addition of a large amount of active diluent or solvent causes additional environmental pollution and does not meet the trend and the requirement of environmental protection, e.g. CN 106147560A; 2) A low-activity isocyanate, e.g. macromolecular prepolymer, is selected to reduce the reaction activity so as to ensure that the coating has a sufficient working time, but the low-activity macromolecular prepolymer generally has high viscosity, so that not only the application difficulty is increased, but also the drying speed of the coating is slowed down, the hardness of the coating layer formed from the coating is low, and the surface of the coating layer cannot be completely dried even for a long time, for example, US20040067315A, CN102300894, US-A 3428610, WO2007/039133. Therefore, the selection of the low-activity isocyanate is only suitable for some applications in the field of elastomer or waterproof coating layer. 3) The use of the low-activity isocyanate-reactive component, such as the aspartic ester synthesized on the basis of 3,3'-dimethyl-4,4-diaminodicyclohexylmethane, is chosen to extend the working time, but to substantially extend the drying time of the coating and not to meet the requirements of industrial applications for drying time.

Therefore, it is desirable to develop a coating having a long working time, a short surface-drying time, a high hardness, and a high bubble-free film thickness.

### Summary of the Invention

The object of the present invention is to provide a two-component coating composition, a method for applying the coating composition and the use of the composition, and a product obtained by coating with the coating composition.

The two-component coating composition according to the present invention contains an A-component containing a polyaspartic ester and a B-component containing a polyether-modified polyisocyanate, the composition has a molar ratio of isocyanate groups to amino groups of 0.8:1-4:1, the polyether-modified polyisocyanate is obtainable by reacting a system containing the following components:

a) a polyisocyanate having an isocyanate group functionality of 2-4.5, containing at least 35 wt.% of hexamethylene diisocyanate trimer, pentamethylene diisocyanate trimer or a combination thereof;

b) a polyoxyalkylene monoether alcohol; and

c) optionally a catalyst;

the polyoxyalkylene monoether alcohol has a number-average molecular weight of 900g/mol-2000g/mol and an oxypropylene group content of 45 wt.%-100 wt.%, relative to the total weight of the oxyalkylene group of the polyoxyalkylene monoether alcohol;
the system has an equivalent ratio of isocyanate groups to hydroxyl group of 5:1-110:1; the polyether-modified polyisocyanate has the following characteristics:

i) the average isocyanate functionality is 1.8-4.1; and
ii) the isocyanate group content is 8 wt.%-20 wt.%, relative to the total weight of the polyisocyanate;

the amount of the polyoxyalkylene monoether structure of the B-component is greater than 10 wt.% and less than 50 wt.%, relative to the total weight of the B-component.

According to one aspect of the present invention, there is provided the use of the two-component coating composition provided according to the present invention for protecting the surface of a substrate or a surface coating layer of a substrate.
According to another aspect of the present invention, there is provided a coating method, comprising the steps of applying the two-component coating composition provided according to the present invention to the surface of a substrate and subsequently curing and drying.
According to another aspect of the present invention, there is provided a coated product, containing a substrate and a coating layer formed by applying the two-component coating composition provided according to the present invention to the substrate, curing and drying.
The two-component coating composition of the present invention can be applied to solvent-borne or solvent-free systems, particularly solvent-free systems, and not only have a relatively short surface-drying time, but also have a long working time. It is easy for the application of the coating composition of the invention, which can be brush-coated, roll-coated or applied with a common spraying equipment without a special spraying equipment.
The coating layer formed by drying the two-component coating composition of the present invention has a relatively high hardness, and can meet the requirements of many applications for the hardness of the coating layer.
The coating layer formed by drying the two-component coating composition of the present invention also has a relatively high bubble-free film thickness.

## Detailed Description

The present invention provides a two-component coating composition, which contains an A-component containing a polyaspartic ester and a B-component containing a polyether-modified polyisocyanate, the composition has a molar ratio of isocyanate groups to amino groups of 0.8:1-4:1, the polyether-modified polyisocyanate is obtainable by reacting a system containing the following components:

a) a polyisocyanate having an isocyanate group functionality of 2-4.5, containing at least 35 wt.% of hexamethylene diisocyanate trimer, pentamethylene diisocyanate trimer or a combination thereof;

b) a polyoxyalkylene monoether alcohol; and

c) optionally a catalyst;

the polyoxyalkylene monoether alcohol has a number-average molecular weight of 900g/mol-2000g/mol and an oxypropylene group content of 45 wt.%-100 wt.%, relative to the total weight of the oxyalkylene group of the polyoxyalkylene monoether alcohol;
the system has an equivalent ratio of isocyanate groups to hydroxyl group of 5:1-110:1; the polyether-modified polyisocyanate has the following characteristics:

i) the average isocyanate functionality is 1.8-4.1; and

ii) the isocyanate group content is 8 wt.%-20 wt.%, relative to the total weight of the polyisocyanate;

the amount of the polyoxyalkylene monoether structure of the B-component is greater than 10 wt.% and less than 50 wt.%, relative to the total weight of the B-component. The present invention also provides a method for applying the two-component coating composition and the use of the composition, and a product obtained by coating with the coating composition.

Two-component coating composition

With respect to the two-component coating composition described herein, the term two-component refers to a coating composition that contains at least two components that must be stored in separate containers due to their mutual reactivity. When these two separate components are mixed and applied to a substrate, the mutually reactive compounds in the two components react to crosslink and form a cured coating layer.

The solvent-free coating of the present application refers to a coating having a VOC content of less than 60 g/L.

The term "curing and drying" as used herein refers to a process from a liquid state to a cured state of a liquid coating composition.

The term "each independently" as used herein means that the identities of R may be identical or different.

The term "polyurethane" as used herein refers to polyurethane urea and/or polyurethane polyurea and/or polyurea and/or polythiourethane.

The term "trimer" as used herein refers to a pure trimer, a mixture of a trimer and its higher homologue containing more than one isocyanurate ring.

The composition has a molar ratio of isocyanate groups and amino groups of preferably 0.8:1-2.65:1, further preferably 1:1-2.5:1, most preferably 1:1-2:1.

The composition is preferably solvent-borne or solvent-free, most preferably solvent-free.

A-component polyaspartic ester

The polyaspartic ester is preferably obtained by the Michael addition reaction of a system containing a polyamine and an ester.

The term "polyamine" as used herein refers to a compound containing at least two free primary and/or secondary amino groups, and the polyamine comprises a polymer containing at least two pendant and/or terminal amino groups.

The reaction to prepare the polyaspartic ester may be carried out in the absence of a solvent or in the presence of a suitable solvent, preferably in the presence of a solvent.

The solvent is preferably one or more of the following: alcohols, ethers, acetates and ketones.

The alcohol is preferably one or more of the following: methanol, ethanol, butyl ethylene glycol and propanol.

The acetate is preferably n-butyl acetate.

The ketone is preferably methyl ethyl ketone.

The reaction temperature is preferably 0°C-100°C.

The weight ratio of the maleate and/or fumarate to the polyamine is preferably 2:1.

The weight ratio of the olefinic double bonds of the maleate and/or fumarate to the primary amino groups of the polyamine is preferably 1:1.

The product obtained from the reaction is preferably purified by rectification.

Preferably, the polyaspartic ester has a structure of formula I:

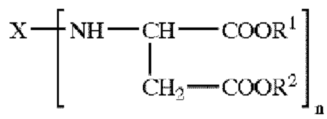

I,

wherein,

X represents an n-valent organic segment which does not react with an isocyanate group at a temperature of not higher than 100°C,

$R^1$ and $R^2$ are each independently an organic group which does not react with an isocyanate group at a temperature of 100°C or less under a normal pressure,

n is an integer not less than 2.

Said X is preferably one or more of the following: an aliphatic structure, an araliphatic structure and a cycloaliphatic structure, most preferably a cycloaliphatic structure.

$R^1$ and $R^2$ are each independently preferably an alkyl residual group having 1-10 carbon atoms, most preferably one or more of the following: methyl, ethyl and butyl.

Said n is preferably an integer of 2-4, most preferably 2.

When n of the polyaspartic ester is 2, the polyaspartic ester is preferably obtained by a reaction comprising a polyamine of the following formula and a maleate and/or a fumarate of the following formula:

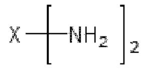

,

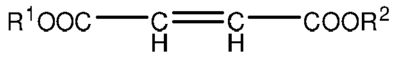

.

Among the polyamines, X is preferably an n-valent organic group obtained by removing an amino group from a primary polyamine or a polyether polyamine, further preferably a divalent hydrocarbyl obtained by removing an amino group from a primary polyamine or a polyether polyamine, and most preferably a divalent hydrocarbyl obtained by removing an amino group from a primary polyamine.

The primary polyamine is preferably one or more of the following: ethylene diamine, 1,2-diaminopropane, 1,4-diaminobutane, 1,3-diaminopentane, 1,6-diaminohexane, 2,5-diamino-2,5-dimethylhexane, 2,2,4-trimethyl-1,6-diaminohexane, 2,4,4-trimethyl-1,6-diaminohexane, 1,11-diaminoundecane, 1,12-diaminododecane, 1,3-cyclohexanediamine and 1,4-cyclohexanediamine, amino-3,3,5-trimethyl-5-aminomethylcyclohexane, 2,4-hexahydrotoluylenediamine, 2,6-hexahydrotoluylenediamine, 2,4'-diamino-dicyclohexylmethane, 4,4'-diamino-dicyclohexylmethane, 3,3'-dialkyl-4,4'-diaminodicyclohexylmethane, 2,4,4'-triamino-5-methyldicyclohexylmethane, 2-methyl-1,5-pentamethylene diamine, 1,3-xylylenediamine and 1,4-xylylenediamine; further preferably one or more of the following: amino-3,3,5-trimethyl-5-aminomethylcyclohexane, 2,4'-diamino-dicyclohexylmethane, 3,3'-dialkyl-4,4'-diaminodicyclohexylmethane, 4,4'-diamino-dicyclohexylmethane and 2-methyl-1,5-pentamethylene diamine; most preferably one or more of the following: 2,4'-diamino-dicyclohexylmethane, 4,4'-diamino-dicyclohexylmethane.

The polyether polyamine preferably has a number-average molecular weight of 148g/mol-600g/mol, and the polyether polyamine preferably has aliphatically bonded primary amino group(s). The number-average molecular weight of the polyether polyamine is determined according to GBT 21863-2008 at 23°C with the gel permeation chromatography by using tetrahydrofuran as the mobile phase and polyethylene glycol as the standard sample.

Among the maleate and/or fumarate, $R^1$ and $R^2$ are preferably isocyanate non-reactive organic groups, and $R^1$ and $R^2$ may be identical or different.

$R^1$ and $R^2$ are each independently most preferably one or more of the following: methyl, ethyl and n-butyl.

The maleate and fumarate are each independently most preferably those substituted with one or more of the following groups: dimethyl ester, diethyl ester, dibutyl ester, for example, di-n-butyl ester, di-sec-butyl ester or di-tert-butyl ester, diamyl ester, di-2-ethylhexyl ester, substituted by a methyl group in the 2-position and substituted by a methyl group in the 3-position.

The maleate is preferably one or more of: dimethyl maleate, diethyl maleate and dibutyl maleate, most preferably diethyl maleate.

The amino group equivalent of the polyaspartic ester is preferably 270-300.

<u>B-component</u>

The amount of the polyoxyalkylene mono-ether structure of the B-component is preferably 15 wt.%-45 wt.%, further preferably 20 wt.%-40 wt.%, also preferably 20 wt.%-37 wt.%, most preferably 24 wt.%-37 wt.%, relative to the total weight of the B-component. (Calculation: (the amount of polyoxyalkylene monoether alcohol/the amount of B component)*100.)

The B-component preferably further has the following characteristics:

the average isocyanate functionality is 1.8-4.1; and

the isocyanate group content is 8 wt.%-20 wt.%, relative to the total weight of the B-component.

Preferably, B-component contains no more than 0.5wt.% of isophorone diisocyanate trimer, relative to the total weight of the B-component; most preferably, the B-component does not contain isophorone diisocyanate trimer.

The average isocyanate functionality of the B-component is preferably 2.0-4.0.

The isocyanate group content of the B-component is preferably 10 wt.%-20 wt.%, most preferably 12 wt.%-18 wt.%, relative to the total weight of the B-component.

The isocyanate group (NCO) content is preferably measured according to DIN-EN ISO 11909:2007-05.

In the present invention, when the B-component contains components such as a catalyst, an auxiliary agent, and an additive and the like, upon calculating the isocyanate group content, the amount of the HDI/PDI trimer and the amount of the polyoxyalkylene monoether structure of the B-component, the total weight of the B-component is the total

weight of the NCO group-containing components in the B-component, and the catalyst, the auxiliary agent, the additive and the like in the B-component are not included in the total weight of the B-component.

Polvether-modified polyisocyanate

The polyether-modified polyisocyanate of the present invention may be present in the form of a mixture, which may contain components that have not completely reacted in the system.
The polyether-modified polyisocyanate of the present invention is transparent and almost colorless.
The polyether-modified polyisocyanate is preferably hydrophobic. Hydrophobic here means incapable of dissolving as well dispersing in water.
The average isocyanate functionality of the polyether-modified polyisocyanate is preferably 2.0-4.0.
The isocyanate group content of the polyether-modified polyisocyanate is preferably 10 wt.%-20 wt.%, most preferably 12 wt.%-18 wt.%, relative to the total weight of the polyether-modified polyisocyanate.
The isocyanate group (NCO) content is preferably measured according to DIN-EN ISO 11909:2007-05.
The viscosity of the polyether-modified polyisocyanate in solvent-free form is preferably 1000mPa•s-2300mPa•s.
The viscosity is preferably determined according to DIN EN ISO 3219:1994-10 at 23°C under a shear rate of $10s^{-1}$, with the MV-DIN rotor being chosen.
The polyether-modified polyisocyanate preferably further has the following characteristics: iii) the amount of the polyoxyalkylene monoether structure is greater than 10 wt.% and less than 50 wt.%, relative to the total weight of the polyether-modified polyisocyanate.
The amount of the polyoxyalkylene monoether structure of the polyether-modified polyisocyanate is preferably 15 wt.%-45 wt.%, further preferably 20 wt.%-40 wt.%, also preferably 20 wt.%-37 wt.%, most preferably 24 wt.%-37 wt.%, relative to the total weight of the polyether-modified polyisocyanate composition.
The amount of the polyether-modified polyisocyanate is preferably 70 wt.%-100 wt.%, further preferably 80 wt.%-100 wt.%, most preferably 90 wt.%-100 wt.%, based on the total weight of the B-component.
The polyether-modified polyisocyanate preferably has a color value of less than 120. The color value is determined according to DIN-EN1557:1997-03.
Preferably, the polyether-modified polyisocyanate contains no more than 0.5wt.% of isophorone diisocyanate trimer, relative to the total weight of the polyether-modified polyisocyanate. Most preferably, the polyether-modified polyisocyanate is free of isophorone diisocyanate trimer.
The polyether-modified polyisocyanate is preferably an aliphatic-based polyisocyanate composition, a cycloaliphatic-based polyisocyanate composition, or a combination thereof.
The average isocyanate functionality of the polyether-modified polyisocyanate is calculated according to the following formula:

$$F = \frac{(\sum \text{equiv NCO} \ - \sum \text{equivOH})}{\sum\left(\frac{\text{equiv NCO}}{f_{NCO}}\right) + \Sigma\text{molOH} - \Sigma\text{equivOH}}$$

wherein, F: the average isocyanate functionality of the polyether modified polyisocyanate

∑Equiv NCO: the sum of the isocyanate functional group equivalents of the component a having an isocyanate group functionality of 2-4.5

∑Equiv OH: the sum of the hydroxyl equivalents of the component b

$f_{NCO}$: the isocyanate group functionality of the component a) polyisocyanate having an isocyanate group functionality of 2-4.5 in the system, obtained by calculating from the isocyanate group content of the polyisocyanate and the molecular weight of the polyisocyanate, the molecular weight is determined by gel permeation chromatography (GPC) according to DIN 55672-1:2016-03.

∑mol OH: the sum of the moles of hydroxyl functional groups of the component b polyoxyalkylene monoether alcohol.

Component a) polyisocyanate having an isocyanate group functionality of 2-4.5

The polyisocyanate having an isocyanate group functionality of 2-4.5 has an isocyanate group functionality of preferably 2.5-4.4, most preferably 2.5-4.

The polyisocyanate having an isocyanate group functionality of 2-4.5 has in solvent-free form a viscosity of preferably 500mPa·s-1500mPa·s.

The polyisocyanate having an isocyanate group functionality of 2-4.5 has an isocyanate group content of preferably 15 wt.%-25 wt.%, most preferably 16 wt.%-24 wt.%, based on the amount of the component a) polyisocyanate having an isocyanate group functionality of 2-4.5 being 100 wt.%.

The polyisocyanate having an isocyanate group functionality of 2-4.5 contains one or more of the following: hexamethylene diisocyanate trimer and pentamethylene diisocyanate trimer. The amount of hexamethylene diisocyanate trimer, pentamethylene diisocyanate trimer or a combination thereof is 35 wt.%-100 wt.%, preferably 40 wt.%-100 wt.%, further preferably 50 wt.%-100 wt.%, most preferably 65 wt.%-100 wt.%, relative to the total weight of the polyisocyanate having an isocyanate group functionality of 2-4.5.

Preferably, the component a) polyisocyanate having an isocyanate group functionality of 2-4.5 further contains an additional isocyanate.

The amount of the additional isocyanate is preferably not more than 65 wt.%, further preferably not more than 60 wt.%, more preferably not more than 50 wt.%, most preferably not more than 35 wt.%, relative to the total weight of the component a) polyisocyanate having an isocyanate group functionality of 2-4.5.

The additional isocyanate is preferably one or more of the following: aliphatic polyisocyanate and cycloaliphatic polyisocyanate, further preferably aliphatic polyisocyanate, furthermore preferably one or more of the following: aliphatic isocyanate uretdione and aliphatic isocyanate biuret, more preferably one or more of the following: hexamethylene diisocyanate uretdione, hexamethylene diisocyanate biuret and pentamethylene diisocyanate uretdione, most preferably one or more of the following: hexamethylene diisocyanate uretdione and hexamethylene diisocyanate biuret.

The aliphatic polyisocyanate and the cycloaliphatic polyisocyanate each independently preferably have one or more of the following structures: iminooxadiazinedione, isocyanurate, uretdione, allophanate and biuret. The aliphatic polyisocyanate and the cycloaliphatic polyisocyanate are each independently prepared by simple modification of diisocyanate and synthesized from at least two diisocyanates, for example, as described in DE-OS 1670666, 3700209, 3900053, EP A 336205 and EP A 339396. The diisocyanate is preferably a diisocyanate having a number average molecular weight of 140g/mol-400g/mol and containing aliphatically and/or cycloaliphatically bonded isocyanate group(s), and is preferably one or more of the following: 1,4-diisocyanatobutane, 1,6-diisocyanatohexane (HDI), 1,5-diisocyanatopentane (PDI), 1,5-diisocyanato-2,2-dimethylpentane, 2,2,4-and 2,4,4-trimethyl-1,6-diisocyanatohexanes, 1,10-diisocyanatodecane, 1-Isocyanato-3,3,5-trimethyl-5-isocyanatomethylcyclohexane (isophorone diisocyanate, IPDI), 1,3-and 1,4-diisocyanatocyclohexanes, 4,4'-diisocyanatodicyclohexylmethane and a mixture of these diisocyanates, and is more preferably one or more of the following: 1,4-diisocyanatobutane, 1,6-diisocyanatohexane (HDI), 1,5-diisocyanatopentane (PDI), 1,5-diisocyanato-2,2-dimethylpentane, 2,2,4-and 2,4,4-trimethyl-1,6-diisocyanatohexanes, 1,10-diisocyanatodecane, 1,3-and 1,4-diisocyanatocyclohexanes, 4,4'-diisocyanatodicyclohexylmethane and a mixture of these diisocyanates.

The amount of the hexamethylene diisocyanate uretdione and/or the hexamethylene diisocyanate biuret is preferably not more than 65 wt.%, further preferably not more than 60 wt.%, more preferably not more than 50 wt.%, most preferably not more than 35 wt.%, relative to the total weight of the component a) polyisocyanate having an isocyanate group functionality of 2-4.5.

When the system contains two or more polyisocyanates, the isocyanate group functionality of the polyisocyanate refers to the average isocyanate group functionality of the two or more polyisocyanates.

The amount of the polyisocyanate having an isocyanate group functionality of 2-4.5 is preferably greater than 30 wt.%, most preferably greater than 50 wt.%, relative to the total weight of the system.

Component b) polyoxyalkylene monoether alcohol

The component b) polyoxyalkylene monoether alcohol has a number-average molecular weight of preferably 920g/mol-1800g/mol, further preferably 920g/mol-1500g/mol, most preferably 920g/mol-1400g/mol.

The oxypropylene group content of the component b) polyoxyalkylene monoether alcohol is preferably 50 wt.%-100 wt.%, further preferably 60 wt.%-100 wt.%, most preferably 80 wt.%-100 wt.%, relative to the total weight of the oxyalkylene group of the polyoxyalkylene monoether alcohol.

The component b) polyoxyalkylene monoether alcohol is preferably a polypropylene glycol monomethylether averagely containing 16-32 propylene oxide units, further preferably a polypropylene glycol monomethylether averagely containing 16-27 propylene oxide units, most preferably a pure polypropylene glycol monomethylether averagely containing 17-25 propylene oxide units.

The polyoxyalkylene monoether alcohol may be obtained by a known method, and the preferred starting components contain a monohydric alcohol, a secondary monoamine, and an oxyalkylene compound, the monohydric alcohol and the secondary monoamine being present either or both.

The monohydric alcohol is preferably a monohydric alcohol having a molecular weight of 32g/mol-150g/mol, for example the monohydric alcohol used according to EPA-206059, most preferably one or more of the following: methanol and butanol.

The secondary monoamine is preferably one or more of the following: dimethylamine and diethylamine.

The oxyalkylene compound preferably contains 45 wt.%-100 wt.%, further preferably 50 wt.%-100 wt.%, more preferably 60 wt.%-100 wt.%, most preferably 80 wt.%-100 wt.% of propylene oxide, relative to the total weight of the oxyalkylene compound.

The oxyalkylene compound may further comprise ethylene oxide, preferably in an amount of not more than 55 wt.%, further preferably not more than 40 wt.%, most preferably not more than 20 wt.%, relative to the total weight of the oxyalkylene compound.

The starting components are preferably reacted at 40°C-150°C, most preferably at 60°C-130°C.

The equivalent ratio NCO/OH of the starting components is preferably 5:1-110:1, most preferably 8:1-90:1. The starting components are preferably reacted further until the theoretically calculated isocyanate content is reached.

The hydroxyl value of the component b) polyoxyalkylene monoether alcohol is preferably 40 mgKOH/g-61 mgKOH/g.

When the system contains two or more polyoxyalkylene monoether alcohols, the number-average molecular weight of the polyoxyalkylene monoether alcohol refers to the average number-average molecular weight of two or more polyoxyalkylene monoether alcohols; the oxypropylene group content of the polyoxyalkylene monoether alcohol refers to the average oxypropylene group content of two or more polyoxyalkylene monoether alcohols, i.e., the average value of the oxypropylene group contents of two or more polyoxyalkylene monoether alcohols.

The calculation method of the oxypropylene group content of the polyoxyalkylene monoether alcohol is as follows:

$$\overline{PO} = \frac{\sum b^*PO\%wt}{\sum b}$$

wherein:

$\overline{PO}$ is an average value of the oxypropylene group content of the polyoxyalkylene monoether alcohol

$\sum b^*PO\%wt$ is the sum of the amount of oxypropylene unit in the polyoxyalkylene monoether alcohol

$\sum b$ is the total amount of the oxyalkylene group of the polyoxyalkylene monoether alcohol.

When the system contains two or more polyoxyalkylene monoether alcohols, the system preferably contains at least one polyoxyalkylene monoether alcohol having a number-average molecular weight of preferably 900g/mol-2000g/mol, further preferably 920g/mol-1800g/mol, more preferably 920g/mol-1500g/mol, most preferably 920g/mol-1400g/mol; and an oxypropylene group content of preferably 45 wt.%-100 wt.%, further preferably 60 wt.%-100 wt.%, most preferably 80 wt.%-100 wt.%, relative to the total weight of the oxyalkylene group of the polyoxyalkylene monoether alcohol.

The amount of the component b) polyoxyalkylene monoether alcohol is preferably greater than 10 wt.% and less than 50 wt.%, further preferably 15 wt.%-45 wt.%, furthermore preferably 20 wt.%-40 wt.%, more preferably 20 wt.%-37 wt.%, most preferably 24 wt.%-37 wt.%, relative to the total weight of the system.

Component c) catalyst

The component c) catalyst is preferably one or more of the following: sulfonic acid catalysts, phosphoric acid catalysts, tertiary amine catalysts, tertiary phosphine catalysts, tertiary hydroxyalkyl amine catalysts and metal catalysts, most preferably one or more of the following: metal catalysts and phosphoric acid catalysts.

The sulfonic acid catalyst is preferably one or more of the following: methanesulfonic acid, paratoluenesulfonic acid, trifluoromethanesulfonic acid, perfluorobutanesulfonic acid, dodecylbenzene sulfonic acid, methyl-and ethyl-toluenesulfonic acid salts.

The phosphoric acid catalyst is preferably one or more of the following: silylated acid, monoalkyl phosphate

and dialkyl phosphate, further preferably one or more of the following: monobutyl phosphate, monotridecyl phosphate, dibutyl phosphate, dioctyl phosphate, trimethylsilyl methanesulfonate, trimethylsilyl trifluoromethanesulfonate, tris(trimethylsilyl) phosphate and diethyl trimethylsilyl phosphate, most preferably one or more of the following: monobutyl phosphate and dibutyl phosphate.

The tertiary amine catalyst is preferably one or more of the following: triethylamine, tributylamine, N,N-dimethylaniline, N-ethylpiperidine and N,N'-dimethylpiperazine.

The tertiary phosphine catalyst is preferably one or more of the following: triethylphosphine, tributylphosphine and dimethylphenylphosphine.

The tertiary hydroxyalkylamine catalyst is preferably those described in GB2221465 and/or GB2222161, most preferably one or more of the following: triethanolamine, N-methyldiethanolamine, dimethylethanolamine, a mixture of a tertiary bicycloamine (e.g., DBU) with a low molecular weight simple aliphatic alcohol, N-isopropyldiethanolamine, and 1-(2-hydroxyethyl)pyrrolidine.

The metal catalyst may be those described in DEA3240613, preferably one or more of the following: caprylate salts of manganese, caprylate salts of iron, caprylate salts of cobalt, caprylate salts of nickel, caprylate salts of copper, caprylate salts of zinc, caprylate salts of zirconium, caprylate salts of cerium, caprylate salts of lead, naphthenate salts of manganese, naphthenate salts of iron, naphthenate salts of cobalt, naphthenate salts of nickel, naphthenate salts of copper, naphthenate salts of zinc, naphthenate salts of zirconium, naphthenate salts of cerium, naphthenate salts of lead, and mixtures of the above-mentioned salts with acetate salt(s) of lithium, sodium, potassium, calcium or barium. The metal catalyst may also be those described in DEA3219608, preferably one or more of the following: sodium salts of straight or branched alkane carboxylic acids having up to 10 carbon atoms and potassium salts of straight or branched alkane carboxylic acids having up to 10 carbon atoms, wherein the carboxylic acid is preferably one or more of the following: propionic acid, butyric acid, valeric acid, hexanoic acid, heptylic acid, octanoic acid, nonylic acid, decanoic acid and undecanoic acid. The metal catalyst may also be an alkali metal salt and/or an alkaline earth metal salt as described in EPA0100129, preferably one or more of the following: said salts of aliphatic, cycloaliphatic or aromatic mono- and polycarboxylic acids having 2-20 carbon atoms, e.g. sodium benzoate or potassium benzoate. The metal catalyst may also be an alkali metal phenolate known from GB1391066A and GB1386399A, preferably one or more of the following: a sodium phenolate and a potassium phenolate. The metal catalyst may also be those known from GB 809809, preferably one or more of the following: an alkali metal oxide, an alkaline earth metal oxide, an alkali metal hydroxide, an alkaline earth metal hydroxide, an alkali metal carbonate, an alkaline earth metal carbonate, an alkali metal alkoxide, an alkaline earth metal alkoxide, an alkali metal phenolate, an alkaline earth metal phenolate, an alkali metal salt of an alkylenable compound, a metal salt of a weak aliphatic carboxylic acid, a metal salt of a cycloaliphatic carboxylic acid, a basic alkali metal compound complexed with a crown ether and a basic alkali metal compound complexed with a polyether alcohol. The metal catalyst may also be a pyrrolidone potassium salt known from EPA0033581. The metal catalyst may also be a mono- or polycyclic complex of titanium, zirconium and/or hafnium as known from EPA2883895, preferably one or more of the following: zirconium tetra-n-butyrate, zirconium tetra-2-ethylhexanoate, and zirconium tetra-(2-ethylhexoxide). The metal catalyst may also be a tin compound of the type as described in European Polymer Journal, 16, 1979, 147-148, and is preferably one or more of the following: dibutyltin dichloride, diphenyltin dichloride, triphenylstannanol, tributyltin acetate, tributyltin oxide, tin octoate, dibutyl(dimethoxy)stannane, and imidazole tributyltin.

The metal salt of the weak aliphatic carboxylic acid and the metal salt of the cycloaliphatic carboxylic acid are each independently preferably one or more of the following: sodium methoxide, sodium acetate, potassium acetate, sodium acetoacetate, lead 2-ethylhexanoate, and lead naphthenate.

The basic alkali metal compound complexed with the crown ether and the basic alkali metal compound complexed with the polyether alcohol are each independently preferably one or more of the following: the complexes of sodium or potassium carboxylates, which are known from EPA0056158 and EPA0056159.

When the system contains a metal catalyst, a terminator is required after the reaction of the system is finished. Further, the above-mentioned phosphoric acid catalyst, sulfonic acid catalyst and their derivatives may be used herein as a terminator. In addition to these two acid catalysts, other inorganic acids such as hydrochloric acid, phosphorous acid, acid chlorides such as acetyl chloride, benzoyl chloride or isophthaloyl dichloride can also be used as a terminator.

The amount of the catalyst is 0-0.02 wt.%, relative to the total weight of the system.

Solvent

The system may further comprise a solvent, which is inert towards isocyanate groups.

The solvent may be known, and preferably one or more of the following: ethyl acetate, butyl acetate, ethylene glycol monomethyl, ethylether acetic acid ester, 1-acetic acid 2-methoxypropyl-2-acetic acid ester, 2-butanone, 4-methyl-2-pentanone, cyclohexanone, toluene, propylene glycol diacetate, diethylene glycol dimethyl ether, diethylene glycol ethyl ester, butylether acetic acid ester, N-methylpyrrolidone and N-methylcaprolactam.

The amount of the solvent is preferably 0-10 wt.%, relative to the total weight of the system.

Process for preparing polyether-modified polyisocyanate

Preferably, the component b) polyoxyalkylene monoether alcohol is bonded to the component a) polyisocyanate via a urethane group.

It is possible in the system that excessive component a) polyisocyanate having an isocyanate group functionality of 2-4.5 is present in the polyether-modified polyisocyanate.

The polyether-modified polyisocyanate, when being used, may be mixed with an isocyanate other than the polyether-modified polyisocyanate of the present invention, for example, may be mixed with an unmodified isocyanate.

Isocyanate other than the polyether-modified polyisocyanate

The B-component may further contain an isocyanate other than the polyether-modified polyisocyanate.

The isocyanate other than the polyether-modified polyisocyanate is preferably an unmodified isocyanate.

The isocyanate other than the polyether-modified polyisocyanate is preferably one or more of the following: aliphatic isocyanate trimer, aliphatic isocyanate uretdione, aliphatic allophanate, and aliphatic isocyanate biuret.

The amount of the isocyanate other than the polyether-modified polyisocyanate is preferably 0 wt.%-30 wt.%, further preferably 0 wt.%-20 wt.%, more preferably 0 wt.%-10 wt.%, based on the total weight of the B-component.

When the B-component contains an isocyanate other than the polyether-modified polyisocyanate, the average isocyanate functionality of the B-component is calculated as follows:

$$f = \text{NCO\% of the B-component} * 4200/Mn$$

f: average isocyanate functionality of B-component

Mn: the number-average molecular weight of the isocyanate other than the polyether-modified polyisocyanate

Catalyst in two-component coating composition

The two-component coating composition preferably further contains a catalyst, which is one or more of the following: tertiary amines and metal salts, most preferably tertiary amines. The catalyst may be a catalyst capable of accelerating the reaction of isocyanate groups with moisture, such as water.

The catalyst may optionally be contained in the A-component and/or the B-component, or may be stored separately and added when being used to prepare the two-component coating composition.

The catalyst is preferably one or more of the following: tertiary amines and metal salts, most preferably tertiary amines.

The tertiary amine catalyst is preferably one or more of the following: triethylamine, dimorpholinodiethyl ether, N,N-dimethylaminocyclohexane, tris-(dimethylaminomethyl)phenol, 1,3,5-tris(dimethylaminopropyl)hexahydrotriazine, bis(dimethylaminoethyl)ether and 2-[[2-[2-(dimethylamino)ethoxyethyl]methylamino] -ethanol.

The metal salt is preferably one or more of the following: iron chloride, zinc chloride, bismuth isooctanoate, and bismuth carboxylate.

The amount of the catalyst is preferably 0 wt.%-5 wt.%, further preferably 0 wt.%-3 wt.%, furthermore preferably 0 wt.%-1.5 wt.%, more preferably 0 wt.%-0.7 wt.%, more preferably 0 wt.%-0.35 wt.%, most preferably 0 wt.%-0.28 wt.%, relative to the total weight of the polyether-modified polyisocyanate in the B-component.

Additive in two-component coating composition

The two-component coating composition preferably further contains an additive and/or an auxiliary agent. Said additive or auxiliary agent is preferably one or more of the following: a wetting agent, a dispersant, a matting agent, an antifoaming agent, a film former, a thickener, an elastomer, a pigment, a leveling agent, and other additives or auxiliary agents known to those skilled in the art that can be added to the two-component coating composition.

The amount of the additive or auxiliary agent may be an amount well-known to those skilled in the art that can be added.

The additive or auxiliary agent may optionally be contained in the A-component and/or the B-component, or may be stored separately and added when being used to prepare the two-component coating composition.

Use

The two-component coating composition described above may be used for protecting the surface of a substrate or the surface coating layer of a substrate.

Substrate

The substrate may be artificial stone, wood, artificial wood, marble, terrazzo, ceramic, linoleum, metal, mineral material, plastic, rubber, concrete, composite sheet, plate, paper, leather or glass. The substrate may be pretreated. The pretreatment is preferably polishing and/or coating.
The plastic is preferably polyethylene resin or polypropylene resin.
The substrate may be pretreated, and the pretreatment is preferably polishing or coating.
The coating is preferably used to protect floors, walls, surfaces of reinforced concrete or metal containers or other surfaces that need the protection.

Application method

One embodiment of the present invention is a coating method comprising the steps of applying the two-component coating composition described above to the surface of a substrate and subsequently curing and drying.
The curing and drying temperature is preferably 25±2°C, and the humidity is preferably 60±10%.
The application may be a method well-known to those skilled in the art, such as blade coating, dip coating, brush coating, roll coating, spray coating or shower coating.

Coated product

One embodiment of the present invention is a coated product, containing a substrate and a coating layer formed by applying the two-component coating composition described above to the substrate, curing and drying.
The coated product is preferably a floor or a steel structure bridge.
For the application, the roll coating as known to those skilled in the art is preferably used.
The coating layer may be kind of monolayer or multilayer.

**Examples**

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.
Unless otherwise indicated, all numbers expressing quantities of ingredients, reaction conditions, and the like used in the specification and claims are to be understood as being modified by the term "about". Accordingly, unless indicated to the contrary, the numerical parameters set forth herein are approximations that can vary depending upon the desired properties to be obtained.
As used in this specification, unless otherwise indicated, "a", "an", and "the/said" are intended to comprise "at least one" or "one or more". For example, "a component" refers to one or more components, and thus more than one component may be considered and may be employed or used in the practice of the described embodiments.
The expression "and/or" as used herein means one or all of the mentioned elements.
The use of "comprise" and "contain" herein encompasses the presence of the mentioned elements alone and the presence of other elements not mentioned in addition to the mentioned elements.
All percentages in the present invention are by weight unless otherwise stated.
The analysis and measurement of the present invention are carried out at 23±2°C and 50±5% relative humidity, unless otherwise stated.
The isocyanate group (NCO) content is measured according to DIN-EN ISO 11909:2007-05.
The number-average molecular weight of the polyoxyalkylene monoether alcohol is determined according to GBT 21863-2008 at 23°C with the gel permeation chromatography by using tetrahydrofuran as the mobile phase and polyethylene glycol as the standard sample.
The non-volatile component is determined according to DIN EN ISO 3251:2008-06, wherein the measurement conditions comprise the drying temperature of 120°C, the drying time of 2 hours, the test disc diameter of 75mm and the test amount of 2±0.02 g, and the results are expressed in wt.%.
The viscosity is determined according to DIN EN ISO 3219:1994-10 at 23°C under a shear rate of $10s^{-1}$, with

the MV-DIN rotor being chosen.

The amino group content is determined according to AFAM 2011-06054.

The hydroxyl value is determined according to ASTM D4274.

The color value is determined according to DIN-EN1557:1997-03.

Surface-drying time: a coating layer is prepared on a glass by means of a film scraper (the film thickness being set to 200μm); and the measurement is carried out according to GB/T13477.5-2002 by touching the surface of the coating layer with a finger and determining the surface being dried if feeling tacky but without the coating sticking to the finger; the time period taken from the application of the coating composition to the glass surface until the surface of the coating layer being dried is considered as the surface-drying time. The desirable surface-drying time is 150 minutes or less. The short surface-drying time means the drying speed of the coating is high.

Pendulum hardness: a coating layer is prepared on a glass by means of a film scraper (the film thickness being set to 200μm), and the hardness of the coating layer is determined by using a BYK Pendulum hardness tester. The Pendulum hardness (1d) refers to the Pendulum hardness after the coating layer is stored for one day, and the Pendulum hardness (7d) refers to the Pendulum hardness after the coating layer is stored for seven days. The desirable Pendulum hardness (1d) is greater than 20, and the desirable Pendulum hardness (7d) is greater than 70. The high Pendulum hardness means the coating layer formed from the coating has a high hardness.

Working time: the viscosity at which the mixing of the components of the coating is completed and no additional components are added is the initial viscosity, and the time period when the viscosity of the coating is increased to such a point that the coating cannot be applied through roll coating is called as the working time. The longer the working time is, the longer the operable time of the coating is. The desirable working time is 30 minutes or more. The long working time means the long operable time of the coating and the loose application condition of the coating.

Bubble-free film thickness (BFFT): Coating layers with different thicknesses are prepared on glasses by means of a film thickness adjustable film scraper (the film thickness being set to 100μm, 200μm and 400μm) (the test method of the coating thickness: the cured coating layer is peeled from the glass and measured with a film thickness measurement instrument); the application area is about 15cm*10cm; after the coating layer is cured for one day, if the surface of the coating layer has no bubbles observed with naked eyes, the bubble-free film thickness is considered to be more than or equal to the thickness of the coating layer. The desirable bubble-free film thickness is higher than 100μm.

## Raw materials and reagents

Desmophen NH 1420: an amino group equivalent of 279, and a viscosity of 900-2000 mPa·s (25°C), commercially available from Covestro AG, Germany.

Desmophen NH 2850: an amino group equivalent of 295, and a viscosity of 100 mPa•s (25°C), commercially available from Covestro AG, Germany.

Desmophen NH 1520: an amino group equivalent of 290, and a viscosity of 900-2000 mPa•s (25°C), commercially available from Covestro AG, Germany.

Hexamethylene diisocyanate trimer 1: 850g of hexamethylene diisocyanate (HDI) was charged into a four-necked flask equipped with a stirrer, a thermometer, a reflux condenser, a nitrogen gas blowing tube and a dropping funnel under a nitrogen atmosphere, and heated to 65°C with stirring, and 5.5g of trimethyl-2-methyl-2-hydroxyethylammonium hydroxide (a solution diluted to 5 wt.% with isobutanol) was then added, and when the NCO of the reaction solution was 45.6 wt.%, 1.1g of di-n-butyl phosphate was added to terminate the reaction. Unreacted monomers were removed at 140°C and 0.05mbar by means of a thin-film evaporator to give a hexamethylene diisocyanate trimer 1 having a non-volatile content of 100 wt.%, an NCO functionality of 3.0-3.5, a viscosity of 1200 mPa·s (23.5°C), an NCO content of 23.0 wt.% and an HDI monomer concentration of 0.25 wt.%.

Hexamethylene diisocyanate trimer 2: The procedure for preparing the hexamethylene diisocyanate trimer 1 was used, except that, a tetrabutyl phosphoniumfluoride solution (diluted to 50% with a solvent of isopropanol/methanol having a weight ratio of 2:1) was used as the catalyst, and when the NCO in the reaction solution reached 43%, dibutyl phosphate was added to terminate the reaction to give a hexamethylene diisocyanate trimer 2 having a non-volatile content of 100 wt.%, a NCO functionality of 3-3.5, a viscosity of 700 mPa·s (23.5°C), a NCO content of 23.4 wt.%, and a HDI monomer concentration of 0.25 wt.%.

Hexamethylene diisocyanate uretdione 3: To 1000g (5.95 mol) of hexamethylene diisocyanate (HDI) were successively added under dry nitrogen at room temperature, 2 g (0.2%) of N,N-diethylurea as stabilizer, 10 g (1.0%) of 1,3-butanediol as cocatalyst and 3g (0.3%/0.015 mol) of tri-n-butylphosphine as catalyst, and the mixture was heated to 60°C. After a reaction time of 4 hours, the NCO content of the reaction mixture was 40.4%, corresponding to an oligomerization degree of 18.0%. 2.8g (0.015 mol) of methyl p-toluene sulfonate was added to terminate the reaction, and the mixture was heated for 1 hour to 80°C. The thin-layer distillation was carried out at a temperature of 130°C. Then at 105°C and under a pressure of 0.15 mbar, a colorless polyisocyanate containing uretdione groups was obtained, which had a non-volatile content of 100 wt.%, an NCO content of 21.4%, a monomeric HDI content of 0.07% and a

viscosity of 185 mPa·s (23.5°C).

Desmodur N 3200: an aliphatic biuret based on HDI, having a solid content of 100 wt.%, an NCO content of 23 wt.%, an HDI monomer content of less than 0.4 wt.%, a viscosity of about 2500 mPa·s (23°C), and an NCO functionality of 3.0-3.5, commercially available from Covestro AG.

Desmodur XP 2860: an aliphatic allophanate based on HDI, having a solid content of 100 wt.%, an NCO content of 20 wt.%, an HDI monomer content of less than 0.16 wt.%, and a viscosity of about 500 mPa·s (23°C), commercially available from Covestro AG.

T01-A: a polyoxyalkylene monoether alcohol having an oxypropylene group accounting for 100 wt.% of the oxyalkylene group of the polyoxyalkylene monoether alcohol, a number-average molecular weight of 800g/mol, and an OH-value of 66.6 mgKOH/g with the starting components being propylene oxide and n-butanol.

TP-10: a polyoxyalkylene monoether alcohol having an oxypropylene group accounting for 100 wt.% of the oxyalkylene group of the polyoxyalkylene monoether alcohol, a number-average molecular weight of 1000g/mol, and an OH-value of 55 mgKOH/g with the starting components being propylene oxide and n-butanol.

TD-10: a polyoxyalkylene monoether alcohol having an oxypropylene group accounting for 100 wt.% of the oxyalkylene group of the polyoxyalkylene monoether alcohol, a number-average molecular weight of 1200g/mol, and an OH-value of 44.65 mgKOH/g with the starting components being propylene oxide and n-butanol.

LB25: polyoxyalkylene monoether alcohol, having an oxyethylene group accounting for 84.4 wt.% of the oxyalkylene group of the polyoxyalkylene monoether alcohol, a number-average molecular weight of 2250g/mol, an OH value of 25 mgKOH/g, with the starting components being ethylene oxide, propylene oxide and diethylene glycol butyl ether, the weight ratio of ethylene oxide to propylene oxide being 84.4:15.6.

Tetrabutylphosphonium fluoride solution: commercially available from Jin Jin Le Chemical Company.

DABCO NE310: a tertiary amine catalyst having a viscosity 12 mPa·s (25°C), commercially available from Air Chemistry.

Dibutyl phosphate: commercially available from Sigma-Aldrich Shanghai Trade Co. Ltd.

JEFFCAT ZF-10: a tertiary amine catalyst, commercially available from Huntsman Chemical Trade (Shanghai) Co. Ltd.

Zirconium 18HS: a zirconium salt catalyst, commercially available from OMG Borchers GmbH.

DABCO TMR-7: a tertiary amine catalyst, commercially available from Air Chemistry.

DBTL (T12): an organotin catalyst, commercially available from Air Chemistry

Borchi® Kat 22: a catalyst, commercially available from OMG Borchers GmbH.

4Å Molecular sieve: water-absorbing agent, commercially available from Grace Trade (Shanghai) Co., Ltd

BYK 085: a silicone surface auxiliary agent for solvent-free coatings, commercially available from BYK Auxiliary agent Corporation.

BYK 331: a silicone surface auxiliary agent for solvent-free, solvent-borne and aqueous coatings and printing inks, commercially available from BYK Auxiliary agent Corporation.

PGDA: a low odor solvent, commercially available from Dow Chemistry.

DMM: a low odor solvent, commercially available from Dow Chemistry.

PMA: a low odor solvent, commercially available from Dow Chemistry.

Polyether-modified polyisocyanate 1

240g (1.3143eq) of hexamethylene diisocyanate trimer 1 and 0.05g (0.00024 mol) of dibutyl phosphate were added to a 250mL flask with a dropping funnel and a nitrogen inlet and stirred to obtain a solution. The resulting solution was heated to 120°C. 102g (0.1012 eq) of TP-10 was added dropwise to the flask over 45 minutes to react until the isocyanate group (NCO) content reached 14.95%, and the heating was terminated to obtain a polyether-modified polyisocyanate 1,which was a colorless transparent solution and which satisfied the following characteristic data:

Solid content: 100 wt.%

Relative to the total weight of the polyether-modified polyisocyanate 1, the NCO content: 14.95 wt.%

Viscosity (23°C): 1807mPa·s

Color value (Hazen): 35

Isocyanate functionality: 2.95

Relative to the total weight of the polyether-modified polyisocyanate 1, the amount of the polyoxyalkylene monoether

structure was 29.8 wt.%

Relative to the total weight of the polyether-modified polyisocyanate 1, the content of isophorone diisocyanate trimer was 0 wt.%.

Wherein the amount of TP-10 comprised 29.8 wt.% of the system.

Polyether-modified polyisocyanate 2

240g (1.3143eq) of hexamethylene diisocyanate trimer 1 was added to a 250mL flask with a dropping funnel and a nitrogen inlet and stirred and heated to 120°C. 129.3g (0.1283 eq) of TP-10 was added dropwise to the flask over 45 minutes to react until the isocyanate group (NCO) content reached 13.7%, and the heating was terminated to obtain a polyether-modified polyisocyanate 2,which was a colorless transparent solution and which satisfied the following characteristic data:

Solid content: 100 wt.%

Relative to the total weight of the polyether-modified polyisocyanate 2, NCO content: 13.7 wt.%

Viscosity (23°C): 1594mPa·s

Color value (Hazen): 51

Isocyanate functionality: 2.89

Relative to the total weight of the polyether-modified polyisocyanate 2, the amount of the polyoxyalkylene monoether structure was 35.0 wt.%

Relative to the total weight of the polyether-modified polyisocyanate 2, the content of isophorone diisocyanate trimer was 0 wt.%.

Wherein the amount of TP-10 comprised 35.0 wt.% of the system.

Polyether-modified polyisocyanate 3

180g (1.0149eq) of hexamethylene diisocyanate trimer 2 and 0.0079g (0.00004 mol) of dibutyl phosphate were added to a 250mL flask with a dropping funnel and a nitrogen inlet and stirred and heated to 120°C. A mixture of 45.9g (0.0553eq) T01-A and 30.6g (0.0255eq) TD-10 was added dropwise to the flask over 45 minutes to react until the isocyanate group (NCO) content reached 15.12%, and the heating was terminated to obtain a polyether-modified polyisocyanate 3, which was a colorless transparent solution and which satisfied the following characteristic data:

Solid content: 100 wt.%

Relative to the total weight of the polyether-modified polyisocyanate 3, NCO content: 15.12 wt.%

Viscosity (23°C): 1332mPa·s

Color value (Hazen): 17

Isocyanate functionality: 2.5

Relative to the total weight of the polyether-modified polyisocyanate 3, the amount of the polyoxyalkylene monoether structure was 30.0 wt.%

Relative to the total weight of the polyether-modified polyisocyanate 3, the content of isophorone diisocyanate trimer was 0 wt.%.

Wherein, the average number-average molecular weight of T01-A and TD-10 was 923g/mol, and the total

amount by weight of T01-A and TD-10 comprised 30.0 wt.% of the system.

Polyether-modified polyisocyanate 4

160g (0.8857eq) of hexamethylene diisocyanate trimer 1 and 0.0068g (0.000032mol) of dibutyl phosphate were added to a 250mL flask with a dropping funnel and a nitrogen inlet and stirred to obtain a solution. The resulting solution was heated to 120°C. A mixture of 52.33g (0.0523eq) TP-10 and 16.24g (0.0072eq) LB25 was added dropwise to the flask over 45 minutes to react until the isocyanate group (NCO) content reached 15.02%, and the heating was terminated to obtain a polyether-modified polyisocyanate 4, which was a colorless transparent solution and which satisfied the following characteristic data:

Solid content: 100 wt.%

Relative to the total weight of the polyether-modified polyisocyanate 4, NCO content: 15.02 wt.%

Viscosity (23°C): 1654mPa·s

Color value (Hazen): 6

Isocyanate functionality: 2.98

Relative to the total weight of the polyether-modified polyisocyanate 4, the amount of the polyoxyalkylene monoether structure was 29.82 wt.%

Relative to the total weight of the polyether-modified polyisocyanate 4, the content of isophorone diisocyanate trimer was 0 wt.%.

Wherein, the average number-average molecular weight of TP-10 and LB 25 was 1151g/mol, and the total amount by weight of TP-10 and LB 25 comprised 29.82 wt.% of the system, the average of the oxypropylene group content of TP-10 and the oxypropylene group content of LB25 was 80 wt.%.

Polyether-modified polyisocyanate 5

70g (0.3887eq) of hexamethylene diisocyanate trimer 1, 35g (0.1815eq) of hexamethylene diisocyanate uretdione 3 and 0.0021g DBTL12 were added to a 250mL flask with a dropping funnel and a nitrogen inlet and stirred to obtain a solution. The resulting solution was heated to 50°C. 45g (0.0455eq) of TP-10 was added dropwise to the flask over 45 minutes to react until the isocyanate group (NCO) content reached 14.48%, and the heating was terminated to obtain a polyether-modified polyisocyanate 5, which was a colorless transparent solution and which satisfied the following characteristic data:

Solid content: 100 wt.%

Relative to the total weight of the polyether-modified polyisocyanate 5, NCO content: 14.48 wt.%

Viscosity (23°C): 1144mPa·s

Color value (Hazen): 14

Isocyanate functionality: 2.70

Relative to the total weight of the polyether-modified polyisocyanate 5, the amount of the polyoxyalkylene monoether structure was 29.82 wt.%

Relative to the total weight of the polyether-modified polyisocyanate 5, the content of isophorone diisocyanate trimer was 0 wt.%.

Wherein, the amount by weight of TP-10 comprised 29.82 wt.% of the system.

Polyether-modified polyisocyanate 6

315g (1.7490eq) of hexamethylene diisocyanate trimer 1, 105g (0.5445eq) of hexamethylene diisocyanate uretdione 3 and 0.008g DBTL12 were added to a 500mL flask with a dropping funnel and a nitrogen inlet and stirred to obtain a solution. The resulting solution was heated to 50°C. 180g (0.1822eq) of TP-10 was added dropwise to the flask over 45 minutes to react until the isocyanate group (NCO) content reached 14.67%, and the heating was terminated to obtain a polyether-modified polyisocyanate 6, which was a colorless transparent solution and which satisfied the following characteristic data:

Solid content: 100 wt.%

Relative to the total weight of the polyether-modified polyisocyanate 6, NCO content: 14.67 wt.%

Viscosity (23°C): 1252mPa·s

Color value (Hazen): 13

Isocyanate functionality: 2.76

Relative to the total weight of the polyether-modified polyisocyanate 6, the amount of the polyoxyalkylene monoether structure was 29.82 wt.%

Relative to the total weight of the polyether-modified polyisocyanate 6, the content of isophorone diisocyanate trimer was 0 wt.%.

Wherein, the amount by weight of TP-10 comprised 29.82 wt.% of the system.

Polyether-modified polyisocyanate 7

336g (1.8656eq) of hexamethylene diisocyanate trimer 1, 84g (0.4356eq) of hexamethylene diisocyanate uretdione 3 and 0.009g DBTL12 were added to a 500mL flask with a dropping funnel and a nitrogen inlet and stirred and heated to 50°C. 180g (0.1822eq) of TP-10 was added dropwise to the flask over 45 minutes to react until the isocyanate group (NCO) content reached 14.75%, and the heating was terminated to obtain a polyether-modified polyisocyanate 7, which was a colorless transparent solution and which satisfied the following characteristic data:

Solid content: 100 wt.%

Relative to the total weight of the polyether-modified polyisocyanate 7, NCO content: 14.75 wt.%

Viscosity (23°C): 1323mPa·s

Color value (Hazen): 12

Isocyanate functionality: 2.80

Relative to the total weight of the polyether-modified polyisocyanate 7, the amount of the polyoxyalkylene monoether structure was 30 wt.%

Relative to the total weight of the polyether-modified polyisocyanate 7, the content of isophorone diisocyanate trimer was 0 wt.%.

Wherein, the amount by weight of TP-10 comprised 30.0 wt.% of the system.

Polyether-modified polyisocyanate 8

113.3g (0.6272eq) of hexamethylene diisocyanate trimer 1, 56.7g (0.4356eq) of Desmodur N 3200 and 0.0073g (0.00003mol) DBP were added to a 500mL flask with a dropping funnel and a nitrogen inlet and stirred and heated to 120°C. 72.8g (0.0730eq) of TP-10 was added dropwise to the flask over 45 minutes to react until the isocyanate group

(NCO) content reached 14.92%, and the heating was terminated to obtain a polyether-modified polyisocyanate 8, which was a colorless transparent solution and which satisfied the following characteristic data:

Solid content: 100 wt.%

Relative to the total weight of the polyether-modified polyisocyanate 8, NCO content: 14.92 wt.%

Viscosity (23°C): 2242mPa·s

Color value (Hazen): 18

Isocyanate functionality: 3.09

Relative to the total weight of the polyether-modified polyisocyanate 8, the amount of the polyoxyalkylene monoether structure was 30 wt.%

Relative to the total weight of the polyether-modified polyisocyanate 8, the content of isophorone diisocyanate trimer was 0 wt.%.

Wherein, the amount by weight of TP-10 comprised 30.0 wt.% of the system.

Polyether-modified polyisocyanate 9

315g (1.7490eq) of hexamethylene diisocyanate trimer 1 and 0.008g (0.000013mol) T12 were added to a 1000mL flask with a dropping funnel and a nitrogen inlet and stirred to obtain a solution. The resulting solution was heated to 50°C. 180g (0.1822eq) of TP-10 was added dropwise to the flask over 45 minutes to react until the isocyanate group (NCO) content reached 13.18%, and the heating was terminated to obtain a polyether-modified polyisocyanate 9, which was a slightly turbid solution in appearance and which satisfied the following characteristic data:

Solid content: 100 wt.%

Relative to the total weight of the polyether-modified polyisocyanate 9, NCO content: 13.18 wt.%

Viscosity (23°C): 2074mPa·s

Color value (Hazen): Not measured due to the turbidity in the appearance

Isocyanate functionality: 2.87

Relative to the total weight of the polyether-modified polyisocyanate 9, the amount of the polyoxyalkylene monoether structure was 36.4 wt.%

Relative to the total weight of the polyether-modified polyisocyanate 9, the content of isophorone diisocyanate trimer was 0 wt.%.

Wherein, the amount by weight of TP-10 comprised 36.4 wt.% of the system.

Comparative polyether-modified polyisocyanate 1

160g (0.8305eq) of hexamethylene diisocyanate trimer 1 and 0.0059g (0.000026mol) of dibutyl phosphate were added to a 250mL flask with a dropping funnel and a nitrogen inlet and stirred to obtain a solution. The resulting solution was heated to 120°C. 17.8g (0.0178eq) of TP-10 was added dropwise to the flask over 45 minutes to react until the isocyanate group (NCO) content reached 20.46%, and the heating was terminated to obtain a comparative polyether-modified polyisocyanate 1,which was a colorless transparent solution and which satisfied the following characteristic data:

Solid content: 100 wt.%

Relative to the total weight of comparative polyether-modified polyisocyanate 1, NCO content: 20.46 wt.%

Viscosity (23°C): 1485mPa·s

Color value (Hazen): 17

Isocyanate functionality: 3.13

Relative to the total weight of comparative polyether-modified polyisocyanate 1, the amount of the polyoxyalkylene monoether structure was 10 wt.%

Relative to the total weight of comparative polyether-modified polyisocyanate 1, the content of isophorone diisocyanate trimer was 0 wt.%.

Wherein, the amount of TP-10 comprised 10 wt.% of the system.

Comparative polyether-modified polyisocyanate 2

100g (0.5190eq) of hexamethylene diisocyanate trimer 1 and 0.0063g (0.00003mol) of dibutyl phosphate were added to a 250mL flask with a dropping funnel and a nitrogen inlet and stirred to obtain a solution. The resulting solution was heated to 120°C. 100g (0.1012eq) of TP-10 was added dropwise to the flask over 45 minutes to react until the isocyanate group (NCO) content reached 9.55%, and the heating was terminated to obtain a comparative polyether-modified polyisocyanate 2, which was a colorless transparent solution and which satisfied the following characteristic data:

Solid content: 100 wt.%

Relative to the total weight of comparative polyether-modified polyisocyanate 2, NCO content: 9.55 wt.%

Viscosity (23°C): 2065mPa·s

Color value (Hazen): 32

Isocyanate functionality: 2.58

Relative to the total weight of comparative polyether-modified polyisocyanate 2, the amount of the polyoxyalkylene monoether structure was 50 wt.%

Relative to the total weight of comparative polyether-modified polyisocyanate 2, the content of isophorone diisocyanate trimer was 0 wt.%.

Wherein, the amount of TP-10 comprised 50 wt.% of the system.

Comparative polyether-modified polyisocyanate 3

171g (0.9466eq) of hexamethylene diisocyanate trimer 1 and 0.0172g (0.0001mol) of dibutyl phosphate were added to a 1000mL flask with a dropping funnel and a nitrogen inlet and stirred to obtain a solution. The resulting solution was heated to 120°C. 400g (0.4048eq) of TP-10 was added dropwise to the flask over 45 minutes to react until the isocyanate group (NCO) content reached 4.04%, and the heating was terminated to obtain a comparative polyether-modified polyisocyanate 3, which was a colorless transparent solution and which satisfied the following characteristic data:

Solid content: 100 wt.%

Relative to the total weight of comparative polyether-modified polyisocyanate 3, NCO content: 4.04 wt.%

Viscosity (23°C): 2375mPa·s

Color value (Hazen): 28

Isocyanate functionality: 1.83.

Relative to the total weight of comparative polyether-modified polyisocyanate 3, the amount of the polyoxyalkylene monoether structure was 70 wt.%

Relative to the total weight of comparative polyether-modified polyisocyanate 3, the content of isophorone diisocyanate trimer was 0 wt.%.

Wherein, the amount of TP-10 comprised 70 wt.% of the system.

Process for preparing the two-component coating composition

The amounts of the components were shown in Tables 1-4. The substances of the A-component were mixed at normal temperature to obtain the A-component; and the components of the B-component were mixed at normal temperature to obtain the B-component. The A-component and the B-component were mixed at normal temperature to obtain a two-component coating composition.

Method for forming a coating layer

The coating composition was applied to the glass surface by means of a 200μm film scraper with an application area of 15cm*10cm, and cured and dried under the conditions of 27 °C and 68% RH to obtain a coating layer.

Examples 1-26 and Comparative Examples 1-13

Table 1 shows the components of the compositions of Examples 1-2 and Comparative Examples 1-9, and the test results of the compositions and the coatings thereof. Table 2 shows the components of the compositions of Examples 3-8, and the test results of the compositions and the coatings thereof. Table 3 shows the components of the compositions of Examples 9-14 and Comparative Example 10, and the test results of the compositions and the coatings thereof. Table 4 shows the components of the compositions of Examples 15-26 and Comparative Examples 11-12, and the test results of the compositions and the coatings thereof.

Table 1: Components of the compositions and the test results of Examples 1-2 and Comparative Examples 1-9

| | Comparative Example | | | | | | Example | | Comparative Example | | |
|---|---|---|---|---|---|---|---|---|---|---|---|
| | 1 | 2 | 3 | 4 | 5 | 6 | 1 | 2 | 7 8 9 | | |
| A-component | | | | | | | | | | | |
| Desmophen NH 1420 | 45 | 45 | 45 | 45 | 45 | 45 | 45 | 45 | 45 | 45 | 45 |
| BYK 085 | 0.2 | 0.2 | 0.2 | 0.2 | 0.2 | 0.2 | 0.2 | 0.2 | 0.2 | 0.2 | 0.2 |
| BYK 331 | 0.1 | 0.1 | 0.1 | 0.1 | 0.1 | 0.1 | 0.1 | 0.1 | 0.1 | 0.1 | 0.1 |
| 4Å Molecular sieve | 1 | 1 | 1 | 1 | 1 | 1 | 1 | 1 | 1 | 1 | 1 |
| DABCO NE310 | | | | | | 0.1 64 | | 0.1 78 | 0.1 86 | 0.26 0 | |
| DMM | 3 | 3.2 | 3.5 | 3 | 4 | 4 | 4 | 5 | 5.3 | 5.5 | 7 |
| B-component | | | | | | | | | | | |
| Hexamethylene diisocyanate trimer 1 | 24 | 30 | 37 | | | | | | | | |
| Comparative polyether-modified polyisocyanate 1 | | | | 27 | 50 | 82 | | | | | |
| Polyether-modified polyisocyanate 1 | | | | | | | 11 5 | | | | |
| Polyether-modified polyisocyanate 2 | | | | | | | | 89 | | | |

(continued)

| B-component | | | | | | | | | | | |
|---|---|---|---|---|---|---|---|---|---|---|---|
| Comparative polyether-modified polyisocyanate 2 | | | | | | | | | 93 | 130 | |
| Comparative polyether-modified polyisocyanate 3 | | | | | | | | | | | 20 0 |
| NCO/NH (mole ratio) | 0.8 1 | 1.0 2 | 1.2 5 | 0.8 1 | 1.5 1 | 2.4 7 | 2.4 6 | 1.7 8 | 1.3 0 | 1.82 | 1.1 9 |
| Performance test | | | | | | | | | | | |
| Working time/min | 25 | 25 | 25 | 25 | 25 | 35 | 45 | 35 | 30 | 35 | 40 |
| Surface-drying time/min | 30 | 30 | 30 | 30 | 30 | 60 | 12 0 | 70 | 60 | 110 | >1 80 |
| Pendulum hardness (1d)/s | 14 5 | 15 6 | 14 6 | 14 9 | 11 7 | 85 | 65 | 41 | 26 | 20 | <1 0 |
| Pendulum hardness (7d)/s | 16 3 | 16 4 | 16 4 | 16 6 | 17 1 | 11 3 | 12 7 | 11 7 | 51 | 38 | < 1 0 |
| Bubble-free film thickness/μm | >1 00 | >1 00 | >1 00 | >1 00 | >1 00 | <1 00 | >1 00 | >1 00 | >1 00 | 100 200 | >2 00 |

The B-component of the two-component coating compositions of Comparative Examples 1-3 contained hexamethylene diisocyanate trimer 1, which was an unmodified isocyanate, and the coating compositions had a short working time.

The B-component of the two-component coating compositions of Comparative Examples 4-6 contained the comparative polyether-modified polyisocyanate 1, the amount of the polyoxyalkylene monoether structure of the B-component was 10 wt.%, and the coating compositions had a short working timeor a low bubble-free film thickness.

The B-component of the two-component coating compositions of Comparative Examples 7-8 contained the comparative polyether-modified polyisocyanate 2, the amount of the polyoxyalkylene monoether structure of the B-component was 50 wt.%, and the coating compositions had a low Pendulum hardness.

The B-component of the two-component coating compositions of Comparative Example 9 contained the comparative polyether-modified polyisocyanate 3, the amount of the polyoxyalkylene monoether structure of the B-component was 70 wt.%, and the coating compositions had a long surface-drying time and a low Pendulum hardness.

The amount of the polyoxyalkylene monoether structure of the polyether-modified polyisocyanate contained in the B-component of the two-component coating composition of the present invention was greater than 10 wt.% and less than 50 wt.%, and the working time, the surface-drying time, the Pendulum hardness and the bubble-free film thickness of the coating composition could meet the requirement of the practical application.

Table 2: Components of the compositions and the test results of Examples 3-8

| | Example | | | | | |
|---|---|---|---|---|---|---|
| | 3 | 4 | 5 | 6 | 7 | 8 |
| A-component | | | | | | |
| Desmophen NH 1420 | 45 | 45 | 45 | 45 | 45 | 45 |
| BYK 085 | 0.2 | 0.2 | 0.2 | 0.2 | 0.2 | 0.2 |
| BYK 331 | 0.1 | 0.1 | 0.1 | 0.1 | 0.1 | 0.1 |
| 4Å Molecular sieve | 1 | 1 | 1 | 1 | 1 | 1 |
| DABCO NE310 | 0.140 | 0 | 0.110 | 0.140 | 0.240 | 0 |
| DMM | 4 | 3 | 3 | 3 | 5 | 4 |

(continued)

| B-component | | | | | | |
|---|---|---|---|---|---|---|
| Polyether-modified polyisocyanate 4 | 70 | | | | | |
| Polyether-modified polyisocyanate 3 | | 56 | | | | |
| Polyether-modified polyisocyanate 5 | | | 55 | | | |
| Polyether-modified polyisocyanate 6 | | | | 70 | | |
| Polyether-modified polyisocyanate 7 | | | | | 120 | |
| Polyether-modified polyisocyanate 8 | | | | | | 55 |
| NCO/NH (mole ratio) | 1.56 | 1.25 | 1.18 | 1.49 | 2.61 | 1.20 |
| Performance test | | | | | | |
| Working time/min | 30 | 30 | 30 | 30 | 40 | 30 |
| Surface-drying time/min | 60 | 60 | 60 | 50 | 110 | 50 |
| Pendulum hardness (1d)/s | 84 | 69 | 73 | 86 | 45 | 98 |
| Pendulum hardness (7d)/s | 132 | 143 | 105 | 135 | 128 | 145 |
| Bubble-free film thickness/μm | >100 | >100 | >100 | >100 | >100 | >100 |

The polyisocyanate having an isocyanate group functionality of 2-4.5 contained in the system for preparing the polyether-modified polyisocyanates 3 and 4 was 100 wt.% of hexamethylene diisocyanate trimer; the polyisocyanate having an isocyanate group functionality of 2-4.5 contained in the system for preparing the polyether-modified polyisocyanate 5 was 66.7 wt.% of hexamethylene diisocyanate trimer and 33.3 wt.% of hexamethylene diisocyanate uretdione; the polyisocyanate having an isocyanate group functionality of 2-4.5 contained in the system for preparing the polyether-modified polyisocyanate 6 was 75 wt.% of hexamethylene diisocyanate trimer and 25 wt.% of hexamethylene diisocyanate uretdione; the polyisocyanate having an isocyanate group functionality of 2-4.5 contained in the system for preparing the polyether-modified polyisocyanate 7 was 80 wt.% of hexamethylene diisocyanate trimer and 20 wt.% of hexamethylene diisocyanate uretdione; the polyisocyanate having an isocyanate group functionality of 2-4.5 contained in the system for preparing the polyether-modified polyisocyanate 8 was 66.6 wt.% of hexamethylene diisocyanate trimer and 33.4 wt.% hexamethylene diisocyanate biuret, and the working time, the surface-drying time, the Pendulum hardness and the bubble-free film thickness of the two-component coating compositions containing the above-mentioned polyether-modified polyisocyanates of Examples 3-8 could meet the requirement of the practical application.

Table 3: Components of the compositions and test results of Examples 9-14 and Comparative Example 10

| | Examples | | | | | | Comparativ e Example |
|---|---|---|---|---|---|---|---|
| | 9 | 10 | 11 | 12 | 13 | 14 | 10 |
| A-component | | | | | | | |
| Desmophen NH 1420 | 45 | 45 | 45 | 45 | 45 | 45 | 45 |
| BYK 085 | 0.2 | 0.2 | 0.2 | 0.2 | 0.2 | 0.2 | 0.2 |
| BYK 331 | 0.1 | 0.1 | 0.1 | 0.1 | 0.1 | 0.1 | 0.1 |
| 4Å Molecular sieve | 1 | 1 | 1 | 1 | 1 | 1 | 1 |
| DABCO NE310 | 0.09 1 | 0.08 7 | 0.08 3 | | | | 0.060 |
| DMM | 5.5 | 5.5 | 5.5 | 5.5 | 3 | 5.5 | 4 |
| B-component | | | | | | | |
| Hexamethylene diisocyanate trimer 1 | | 8.7 | 16.5 | | | | 60.0 |

(continued)

| | | | | | | | |
|---|---|---|---|---|---|---|---|
| B-component | | | | | | | |
| Hexamethylene diisocyanate uretdione 3 | | | | 13 | 8.48 | | |
| Desmodur XP 2860 | | | | | | 17.1 | |
| Polyether-modified polyisocyanate 1 | 91.0 | 78.0 | 66.0 | 73.7 | | 68.4 | |
| Polyether-modified polyisocyanate 9 | | | | | 40.0 | | |
| NCO/NH (mole ratio) | 2.0 | 2.01 | 2.01 | 2.04 | 1.05 | 2.0 | 2.03 |
| Performance test | | | | | | | |
| working time/min | 40 | 35 | 35 | >30 | >30 | >30 | 25 |
| Surface-drying time/min | 60 | 55 | 50 | 50 | 30 | 55 | 35 |
| Pendulum hardness (1d)/s | 31 | 34 | 38 | 28 | 129 | 27 | 76 |
| Pendulum hardness (7d)/s | 127 | 131 | 136 | 138 | 134 | 131 | 167 |
| Bubble-free film thickness/μm | >100 | >100 | >100 | >10 0 | >10 0 | >10 0 | <100 |

The B-component of the two-component coating compositions of Comparative Example 10 only contained hexamethylene diisocyanate trimer 1 and did not contain polyether-modified polyisocyanate, and the coating compositions had a low bubble-free film thickness and a short working time .

The B-component of the two-component coating composition of Example 9 was wholly the polyether-modified polyisocyanate according to the present invention, and the working time, the surface-drying time, the Pendulum hardness and the bubble-free film thickness of the two-component coating composition could meet the requirement of the practical application.

The B-component of the two-component coating compositions of Examples 10-14 contained the polyether-modified polyisocyanate according to the present invention and an isocyanate other than the polyether-modified polyisocyanates, e.g. isocyanate trimer, isocyanate uretdione and isocyanate allophanate, and the like.

The amount of the isocyanate other than the polyether-modified polyisocyanate in the B-component of the two-component coating composition of Example 10 comprised 10.03 wt.% by weight of the B-component, the amount of the polyether-modified polyisocyanate comprised 89.97 wt.% by weight of the B-component, the amount of the polyoxyalkylene monoether structure of the B-component comprised 26.99 wt.% by weight of the B-component, the average isocyanate functionality of the B-component was 2.99, and the amount of the isocyanate group of the B-component comprised 15.76 wt.% by weight of the B-component.

The amount of the isocyanate other than the polyether-modified polyisocyanate in the B-component of the two-component coating composition of Example 11 comprised 20 wt.% by weight of the B-component, the amount of the polyether-modified polyisocyanate comprised 80 wt.% by weight of the B-component, the amount of the polyoxyalkylene monoether structure of the B-component comprised 24 wt.% by weight of the B-component, the average isocyanate functionality of the B-component was 3.02, and the amount of the isocyanate group of the B-component comprised 16.56 wt.% by weight of the B-component.

The amount of the isocyanate other than the polyether-modified polyisocyanate in the B-component of the two-component coating composition of Example 12 comprised 14.99 wt.% by weight of the B-component, the amount of the polyether-modified polyisocyanate comprised 85.01 wt.% by weight of the B-component, the amount of the polyoxyalkylene monoether structure of the B-component comprised 25.50 wt.% by weight of the B-component, the average isocyanate functionality of the B-component was 2.85, and the amount of the isocyanate group of the B-component comprised 15.92 wt.% by weight of the B-component.

The amount of the isocyanate other than the polyether-modified polyisocyanate in the B-component of the two-component coating composition of Example 13 comprised 17.49 wt.% by weight of the B-component, the amount of the polyether-modified polyisocyanate comprised 82.51 wt.% by weight of the B-component, the amount of the polyoxyalkylene monoether structure of the B-component comprised 30 wt.% by weight of the B-component, the average isocyanate functionality of the B-component was 2.76, and the amount of the isocyanate group of the B-component comprised 14.62 wt.% by weight of the B-component.

The amount of the isocyanate other than the polyether-modified polyisocyanate in the B-component of the two-component coating composition of Example 14 comprised 20 wt.% by weight of the B-component, the amount of the polyether-modified polyisocyanate comprised 80 wt.% by weight of the B-component, the amount of the polyoxyalkylene monoether structure of the B-component comprised 24 wt.% by weight of the B-component, the average isocyanate functionality of the B-component was 2.82, and the amount of the isocyanate group of the B-component comprised 15.96 wt.% by weight of the B-component.

The working time, the surface-drying time, the Pendulum hardness and the bubble-free film thickness of the two-component coating compositions of Examples 10-14 could meet the requirement of the practical application.

Table 4: Components of the compositions and test results of Examples 15-26 and Comparative Examples 11-12

| | Example | | | | | | | | | | | | Comparative Example | |
|---|---|---|---|---|---|---|---|---|---|---|---|---|---|---|
| | 15 | 16 | 17 | 18 | 19 | 20 | 21 | 22 | 23 | 24 | 25 | 26 | 11 | 12 |
| A-component | | | | | | | | | | | | | | |
| Desmophen NH 1420 | 45 | 45 | 45 | 45 | 45 | 45 | 45 | 45 | 45 | 45 | 45 | 45 | 45 | 45 |
| Desmophen NH 2850 | | | | | | | | | | | 5.8 | 5.8 | | |
| Desmophen NH 1520 | | | | | | | | | | | | 5.8 | | |
| BYK 085 | 0.2 | 0. 2 | 0.2 | 0.2 | 0.2 | 0.2 | 0.2 | 0.2 | 0.2 | 0.2 | 0.2 | 0.2 | 0. 2 | 0. 2 |
| BYK 331 | 0.1 | 0. 1 | 0.1 | 0.1 | 0.1 | 0.1 | 0.1 | 0.1 | 0.1 | 0.1 | 0.1 | 0.1 | 0. 1 | 0. 1 |
| 4Å Molecular sieve | 1 | 1 | 1 | 1 | 1 | 1 | 1 | 1 | 1 | 1 | 1 | 1 | 1 | 1 |
| DABCO NE310 | | | | 0.058 | | | 0.062 | | 0.314 | 0.487 | 0.222 | 0.224 | 0. 65 | 0. 8 |
| Zirconium 18HS | | | | | 0.162 | | | | | | | | | |
| DABCO TMR-7 | | | | | | 0.12 | | | | | | | | |
| DBTL | | | | | | | | 0.08 | | | | | | |
| JEFFCAT ZF-10 | | | | | | | | | | | | | | |
| DMM | 3.5 | 3. 8 | | | 5.5 | 6 | 6 | 6.5 | 7.5 | 9 | 6 | 6 | 10 | 11 |
| PMA | | | 4.2 | | | | | | | | | | | |
| PGDA | | | | 5 | | | | | | | | | | |
| B-component | | | | | | | | | | | | | | |
| Polyether-modified polyisocyanate 1 | 37 | 45 . 3 | 56 | 68.5 | 82 | 92 | 100 | 114 | 136.5 | 182 | 111 | 122 | 20 5 | 22 8 |
| NCO/NH (mole ratio) | 0.81 | 1. 0 | 1.23 | 1.5 | 1.8 | 2.02 | 2.20 | 2.50 | 3.0 | 4.0 | 2.17 | 2.15 | 4. 50 | 5. 01 |

(continued)

| Performance test | | | | | | | | | | | | | | |
|---|---|---|---|---|---|---|---|---|---|---|---|---|---|---|
| working time /min | 30 | 30 | 30 | 30 | 35 | 35 | 40 | 55 | 45 | 50 | 35 | 40 | 60 | 60 |
| Surface-drying time/min | 40 | 40 | 40 | 45 | 50 | 10 0 | 60 | 11 0 | 12 0 | 15 0 | 11 0 | 13 0 | >1 50 | >1 50 |
| Pendulum hardness (1d)/s | 51 | 10 3 | 68 | 65 | 24 | 23 | 21 | 69 | 75 | 83 | 48 | 61 | 84 | 86 |
| Pendulum hardness (7d)/s | 80 | 12 8 | 12 7 | 12 5 | 99 | 11 9 | 12 0 | 12 5 | 12 1 | 11 5 | 11 7 | 13 4 | 11 1 | 10 7 |
| Bubble-free film thickness/μm | >1 00 | >1 00 | >1 00 | >1 00 | >1 00 | >1 00 | >1 00 | >1 00 | >1 00 | >1 00 | >1 00 | >1 00 | >1 00 | >1 00 |

The two-component coating compositions of Examples 15-26 had a molar ratio of isocyanate groups to amino groups of 0.8:1-4:1, and the working time, the surface-drying time, the Pendulum hardness and the bubble-free film thickness of the two-component coating compositions could meet the requirement of the practical application.

The two-component coating compositions of Comparative Examples 11-12 had a molar ratio of isocyanate groups to amino groups of 4.5:1 and 5.01: 1 respectively, which were out of the range required for the two-component coating composition of the present invention, and the two-component coating compositions of Comparative Examples had a long surface-drying time and could not meet the requirements of practical application.

It will be evident to those skilled in the art that the invention is not limited to the details set forth, and that the present invention may be embodied in other specific forms without departing from the spirit or essential characteristics thereof. The present embodiments are therefore to be considered in all respects as illustrative and not limiting, and thereby the scope of the present invention is indicated by the appended claims rather than by the foregoing description; and thereby any changes, as long as it falls within the meaning and range of the equivalence to the claims, should be considered as a part of the present invention.

## Claims

1. A two-component coating composition, containing an A-component containing a polyaspartic ester and a B-component containing a polyether-modified polyisocyanate, the composition has a molar ratio of isocyanate groups to amino groups of 0.8:1-4:1, the polyether-modified polyisocyanate is obtainable by reacting a system containing the following components:

   a) a polyisocyanate having an isocyanate group functionality of 2-4.5, containing at least 35 wt.% of hexamethylene diisocyanate trimer, pentamethylene diisocyanate trimer or a combination thereof;
   b) a polyoxyalkylene monoether alcohol; and
   c) optionally a catalyst;

   the polyoxyalkylene monoether alcohol has a number-average molecular weight of 900g/mol-2000g/mol and an oxypropylene group content of 45 wt.%-100 wt.%, relative to the total weight of the oxyalkylene group of the polyoxyalkylene monoether alcohol;
   the system has an equivalent ratio of isocyanate groups to hydroxyl group of 5:1-110:1; the polyether-modified polyisocyanate has the following characteristics:

   i) the average isocyanate functionality is 1.8-4.1; and
   ii) the isocyanate group content is 8 wt.%-20 wt.%, relative to the total weight of the polyisocyanate;

   the amount of the polyoxyalkylene monoether structure of the B-component is greater than 10 wt.% and less than 50 wt.%, relative to the total weight of the B-component.

2. The two-component coating composition according to claim 1, **characterized in that** the composition has a molar ratio of isocyanate groups to amino groups of 0.8:1-2.65:1, preferably 1:1-2.5:1, most preferably 1:1-2:1.

3. The two-component coating composition according to claim 1 or 2, **characterized in that** the composition is solvent-borne or solvent-free, most preferably solvent-free.

4. The two-component coating composition according to any of claims 1-3, **characterized in that** the amount of the polyoxyalkylene monoether structure of the B-component is 15 wt.%-45 wt.%, preferably from 20 wt.%-40 wt.%, further preferably from 20 wt.%-37 wt.%, most preferably from 24 wt.%-37 wt.%, relative to the total weight of the B-component.

5. The two-component coating composition according to any of claims 1-4, **characterized in that** the polyether-modified polyisocyanate further has the following characteristics: iii) relative to the total weight of the polyisocyanate, the amount of the polyoxyalkylene monoether structure is greater than 10 wt.% and less than 50 wt.%, preferably 15 wt.%-45 wt.%, further preferably 20 wt.%-40 wt.%, more preferably 20 wt.%-37 wt.%, most preferably 24 wt.%-37 wt.%.

6. The two-component coating composition according to any of claims 1-5, **characterized in that** the B-component further contains an isocyanate different from the polyether modified polyisocyanate, most preferably contains an unmodified isocyanate.

7. The two-component coating composition according to any of claims 1-6, **characterized in that** the component a) polyisocyanate having an isocyanate group functionality of 2-4.5 further contains an additional isocyanate, which is one or more of the following: aliphatic isocyanate uretdiones and aliphatic isocyanate biurets.

8. The two-component coating composition according to any of claims 1-7, **characterized in that** the additional isocyanate is one or more of the following: hexamethylene diisocyanate uretdione, hexamethylene diisocyanate biuret and pentamethylene diisocyanate uretdione.

9. The two-component coating composition according to any of claims 1-8, **characterized in that** the oxypropylene group content of the component b) polyoxyalkylene monoether alcohol is 50 wt.%-100 wt.%, preferably 60 wt.%-100 wt.%, most preferably 80 wt.%-100 wt.%, relative to the total weight of the oxyalkylene group of the polyoxyalkylene monoether alcohol.

10. The two-component coating composition according to any of claims 1-9, **characterized in that** the amount of the component b) polyoxyalkylene monoether alcohol is greater than 10 wt.% and less than 50 wt.%, preferably 15 wt.%-45 wt.%, further preferably 20 wt.%-40 wt.%, more preferably 20 wt.%-37 wt.%, most preferably 24 wt.%-37 wt.%, relative to the total weight of the system.

11. The two-component coating composition according to any of claims 1-10, **characterized in that** the number-average molecular weight of the component b) polyoxyalkylene monoether alcohol is 920g/mol-1800g/mol, preferably 920g/mol-1500g/mol, most preferably 920g/mol-1400g/mol.

12. The two-component coating composition according to any of claims 1-11, **characterized in that** the polyether-modified polyisocyanate contains no more than 0.5wt.% of isophorone diisocyanate trimer, relative to the total weight of the polyether-modified polyisocyanate; most preferably the polyether-modified polyisocyanate is free of isophorone diisocyanate trimer.

13. The two-component coating composition according to any of claims 1-12, **characterized in that** the polyaspartic ester has the structure of formula I:

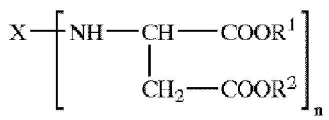

I,

wherein,

X represents an n-valent organic segment which does not react with an isocyanate group at a temperature of not higher than 100°C,

$R^1$ and $R^2$ are each independently an organic group which does not react with an isocyanate group at a temperature of not higher than 100°C under a normal pressure,
n is an integer not less than 2.

**14.** The two-component coating composition according to claim 13, **characterized in that** X is one or more of the following: an aliphatic structure, an araliphatic structure and a cycloaliphatic structure, most preferably a cycloaliphatic structure.

**15.** The two-component coating composition according to claim 13 or 14, **characterized in that** n is 2 and the polyaspartic ester is obtained by a reaction comprising a polyamine of the following formula

$$X[NH_2]_2$$

and a maleate and/or a fumarate of the following formula

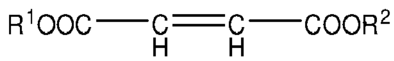

wherein X and $R^1$ and $R^2$ have the meanings given in claim 13 or 14.

Europäisches Patentamt
European Patent Office
Office européen des brevets

# EUROPEAN SEARCH REPORT

Application Number
EP 20 20 3841

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | CN 110 922 871 A (UNIV HUNAN SCIENCE & TECHNOLOGY) 27 March 2020 (2020-03-27) * example 1 * ----- | 1-15 | INV. C08G18/10 C08G18/28 C08G18/38 C08G18/72 C08G18/79 C09J175/08 |
| | | | TECHNICAL FIELDS SEARCHED (IPC) |
| | | | C08G C09J |

The present search report has been drawn up for all claims

2

| Place of search | Date of completion of the search | Examiner |
| --- | --- | --- |
| Munich | 16 April 2021 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 20 3841

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2021

| Patent document cited in search report | Publication date | Patent family member(s) | Publication date |
|---|---|---|---|
| CN 110922871 A | 27-03-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0573860 B
- US 2004067315 A
- CN 103834282 A
- CN 106147560 A
- US 20040067315 A
- CN 102300894
- US 3428610 A
- WO 2007039133 A
- DE OS1670666
- DE 3700209
- DE 3900053
- EP 336205 A
- EP 339396 A
- GB 2221465 A
- GB 2222161 A
- GB 1391066 A
- GB 1386399 A
- GB 809809 A
- EP 0033581 A
- EP 2883895 A
- EP 0056158 A
- EP 0056159 A


### Non-patent literature cited in the description


- *European Polymer Journal,* 1979, vol. 16, 147-148